# EUROPÄISCHE PATENTANMELDUNG

(11) **EP 2 028 429 A2**
(43) Veröffentlichungstag der Anmeldung: **25.02.2009**
(21) Anmeldenummer: 08014762.2
(22) Anmeldetag: 20.08.2008
(51) Int. Cl.: F25B 30/02, F25B 47/02

(54) **Wärmepumpenanlage**

(30) Priorität: 20.08.2007 DE 102007039296
(71) Anmelder: STIEBEL ELTRON GmbH & Co. KG, 37603 Holzminden (DE)
(72) Erfinder: Ott, Sebastian, 37671 Höxter (DE); Smollich, Steffen, 37603 Holzminden (DE)

(57) **Zusammenfassung**

Es wird eine Wärmepumpenanlage vorgesehen, welche einen Kältekreislauf (KK) und einen Sekundärkreislauf (SK) aufweist. Der Kältekreislauf (KK) weist einen Verdampfer (10), einen Verflüssiger (20), einen Verdichter (30) sowie ein elektronisches Expansionsventil (100) auf und ist durch einen Regler (50) steuerbar. Der Sekundärkreislauf (SK) weist eine Heizkreispumpe (220) auf und ist mit dem Verflüssiger (20) gekoppelt. In einer Normalbetriebsart ist die Heizkreispumpe (220) aktiviert und ein erster Drosselwert wird in dem elektronischen Expansionsventil (100) mittels des Reglers (50) eingestellt. In einer Abtaubetriebsart wird die Heizkreispumpe (220) ausgeschaltet oder in ihrer Leistung reduziert, und ein zweiter Drosselwert wird in dem elektronischen Expansionsventil (100) mittels des Reglers (50) eingestellt.

## Beschreibung

Die vorliegende Erfindung betrifft eine Wärmepumpenanlage.

Als Wärmepumpen können beispielsweise Sole/Wasserwärmepumpen, Wasser/Wasserwärmepumpen oder Luft/Wasserwärmepumpen eingesetzt werden, wobei die Luft/Wasserwärmepumpen zunehmend an Bedeutung gewinnen. Bei einer derartigen Luft/Wasserwärmepumpe dient die Außenluft als Wärmequelle und wird beim Durchströmen durch den Verdampfer abgekühlt. Wenn die Lufttemperatur sinkt und der Wassergehalt der Luft konstant bleibt, so steigt die relative Luftfeuchte ϕ. Wenn die relative Luftfeuchte ϕ einen Wert von 100 % erreicht, so beginnt eine Kondensation. Die Luft weist eine Taupunkttemperatur von über 0°C auf, so dass Wasserdampf zunächst als Tropfen auf der Wärmeübertragerfläche des Verdampfers auskondensiert. Die Tropfen können dann anwachsen, gefrieren jedoch nicht, obwohl die Rippentemperatur des Verdampfers unter 0°C liegen kann. Erst wenn die Tropfen genügend lange unterkühlt sind, können sie erstarren. Die Größe der Tropfen bei der Erstarrung hängt dabei von der tatsächlichen Unterkühlung ab. Stärkere Unterkühlungen ergeben kleinere Tropfen. Die Tropfenkondensation findet auch bei Taupunkttemperaturen oberhalb von 0°C statt, wobei erst bei sehr tiefen Temperaturen eine direkte Sublimation erfolgt.

Bei Lamellen-Rohrverdampfern verringert sich der luftseitige freie Strömungsquerschnitt, wenn die Eisschicht auf den Lamellen wächst. Dies kann durch den reduzierten Strömungsquerschnitt zu einer Steigerung des Druckabfalls am Verdampfer und somit zu einem reduzierten Luftvolumenstrom führen. Wenn der übertragene Wärmestrom *Q̇*=*ṁ_{L}*·*cp_{,L}*·*(t_{L,ein}-t_{L,aus}*) darstellt, so sinkt der Luftmassenstrom aufgrund des reduzierten Volumenstroms und somit auch der übertragene Wärmestrom. Durch den reduzierten Wärmestrom sinkt die Verdampfungstemperatur ab. Bei einem konstanten Massenstrom wird die zur Überhitzung zur Verfügung stehende Fläche im Verdampfer reduziert, und die Überhitzung des Kältemittels sinkt ab. Zur weiteren konstanten Aufrechterhaltung der Überhitzung muss der Öffnungsgrad des Expansionsventils reduziert werden. Dies führt zu einem geringeren Kältemittelmassenstrom, wodurch die Verdampfungstemperatur sinkt. Bei gleichem Wärmeübergang steht dann im Verdampfer wieder mehr Fläche zur Überhitzung zur Verfügung, wodurch die Überhitzung steigt.

Die Reduzierung der Kältemittelverdampfungstemperatur reduziert die Leistungszahl der Wärmepumpe. Da eine gewisse Bereifung der Verdampferlamellen ohne Weiteres toleriert werden kann, findet eine Abtauung üblicherweise erst beim Überschreiten eines Grenzwertes statt, so dass eine bedarfsgesteuerte Abtauung bei unterschiedlichen Außenluftbedingungen erfolgen kann und trotzdem eine hohe mittlere Leistungszahl gewährleistet werden kann. Es sind aus dem Stand der Technik verschiedene Verfahren zum Erkennen eines Abtaubedarfs einer Wärmepumpe vorhanden.

Zum Abtauen einer Wärmepumpe bzw. des Verdampfers der Wärmepumpe kann ein Prozessumkehr-Abtauverfahren oder ein Heißgasabtauverfahren verwendet werden. Bei dem Prozessumkehr-Abtauverfahren wird der Kältekreislauf umgekehrt, so dass das verdichtete Heißgas nach dem Verdichter dem Verdampfer mit hohem Druck zugeführt wird, so dass das Heißgas im Verdampfer abkühlt und kondensiert. Hierdurch wird im Verdampfer Wärme freigesetzt, so dass der Verdampfer abtauen kann. Das verflüssigte Kältemittel kann dann in einem separaten Ventil, welches nur für die Abtauung verwendet wird, gedrosselt werden und fließt danach in den Kondensator bzw. den Verflüssiger. Dort wird das Kältemittel mit der Wärme vom Heizkreislauf verdampft und von dem Verdichter angesaugt und verdichtet.

Bei der Heißgasabtauung einer Wärmepumpe wird der Verdampfer mit dem Heißgas beheizt, welche nach dem Verdichtungsprozess aus dem Verdichter austreten. Nach dem Verdichtungsprozess strömt das Heißgas typischerweise durch eine Bypassleitung und tritt in den Verdampfer ein. Das Heißgas kann zuerst den Verdampfer sowie dessen Lamellen aufheizen, so dass sich darauf befindliches Eis schmelzen kann.

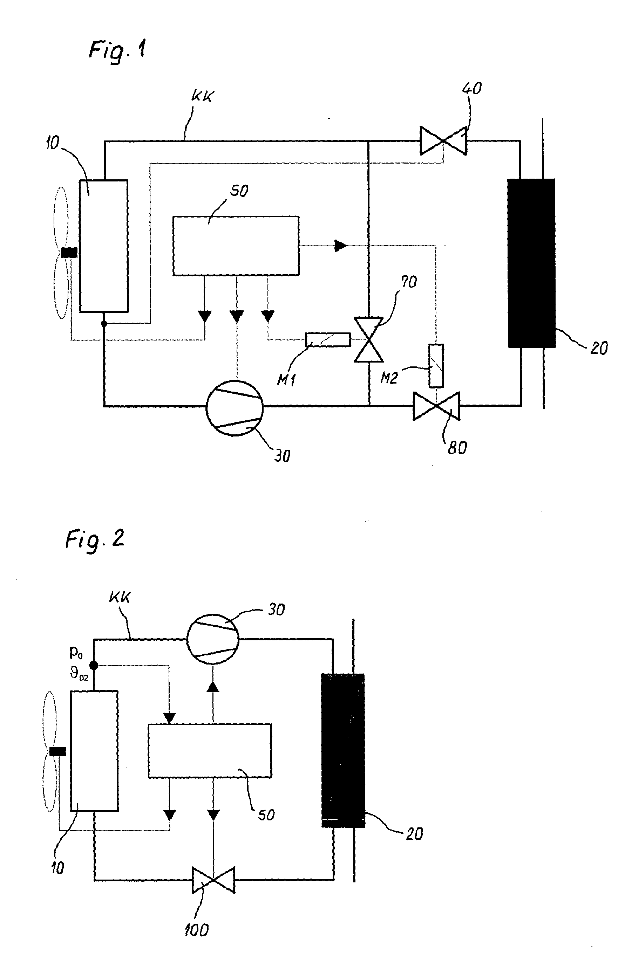

Fig. 1 zeigt eine schematische Veranschaulichung eines Teiles einer Wärmepumpenanlage gemäß dem Stand der Technik. In Fig. 1 weist die Wärmepumpenanlage einen Verdampfer 10, einen Verflüssiger 20, einen Verdichter 30, ein Expansionsventil 40, einen Regler 50 sowie ein erstes und zweites Magnetventil M1, M2, 70, 80 auf. Der Regler 50 dient beispielsweise dazu, die Drehzahl des Gebläses des Verdampfers zu regeln, den Verdichter 30 sowie das erste und zweite Magnetventil M1, M2 zu regeln. In der Normalbetriebsart ist das Magnetventil M2 geöffnet und das erste Magnetventil M1 geschlossen. Wenn der Regler feststellt, dass ein Abtaubedarf des Verdampfers 10 vorliegt, dann wird in die Abtaubetriebsart umgeschaltet und das erste Magnetventil M1 wird geöffnet und das zweite Magnetventil M2 wird geschlossen. Nach der Abtauung erfolgt wiederum eine Umschaltung in die Normalbetriebsart.

In der Normalbetriebsart fließt das Kältemittel vom Verdichter 30 über das zweite Magnetventil M2 durch den Verflüssiger 20, über das Expansionsventil 40 zu dem Verdampfer 10. In der Abtaubetriebsart fließt das Kältemittel hingegen von dem Verdichter 30 durch das Magnetventil M1 und anschließend zu dem Verdampfer 10. Somit wird die Wärme in dem Verdampfer abgegeben. Der Verflüssiger 20 wird daher im Abtaubetrieb überbrückt.

Es ist somit Aufgabe der vorliegenden Erfindung, eine Wärmepumpenanlage vorzusehen, welche eine verbesserte Abtauung des Verdampfers ermöglicht.

Diese Aufgabe wird durch eine Wärmepumpenanlage gemäß Anspruch 1 sowie durch ein Verfahren nach Anspruch 3 gelöst.

Somit wird eine Wärmepumpenanlage vorgesehen, welche einen Kältekreislauf und einen Sekundärkreislauf aufweist. Der Kältekreislauf weist einen Verdampfer, einen Verflüssiger, einen Verdichter sowie ein elektronisches Expansionsventil auf und ist durch einen Regler steuerbar. Der Sekundärkreislauf weist eine Heizkreispumpe auf und ist mit dem Verflüssiger gekoppelt. In einer Normalbetriebsart ist die Heizkreispumpe aktiviert und ein erster Drosselwert wird in dem elektronischen Expansionsventil mittels des Reglers eingestellt. In einer Abtaubetriebsart wird die Heizkreispumpe ausgeschaltet oder in ihrer Leistung reduziert, und ein zweiter Drosselwert wird in dem elektronischen Expansionsventil mittels des Reglers eingestellt.

Gemäß einem Aspekt der vorliegenden Erfindung ist in dem Sekundärkreis eine Raumheizung und/oder eine Warmwasseraufbereitungseinheit vorgesehen.

Die Erfindung betrifft ebenfalls ein Verfahren zum Abtauen einer Wärmepumpenanlage mit einem Kältekreislauf und einem Sekundärkreislauf. Der Kältekreislauf weist einen Verdampfer, einen Verflüssiger, einen Verdichter und ein elektronisches Expansionsventil auf. Der Sekundärkreislauf ist mit dem Verflüssiger gekoppelt und weist eine Heizkreispumpe auf. In einer Normalbetriebsart wird ein erster Drosselwert in dem elektronischen Expansionsventil eingestellt. In einer Abtaubetriebsart wird die Heizkreispumpe abgeschaltet oder in ihrer Leistung reduziert, und es wird ein zweiter Drosselwert an dem Expansionsventil eingestellt.

Weitere Ausgestaltungen der Erfindung sind Gegenstand der Unteransprüche.

Die Vorteile und Ausgestaltungen der Erfindung werden nachstehend unter Bezugnahme auf die Zeichnung näher erläutert.
- Fig. 1: zeigt eine schematische Darstellung einer Wärmepumpenanlage gemäß dem Stand der Technik,
- Fig. 2: zeigt einen Kältekreis einer Wärmepumpenanlage gemäß einem ersten Ausführungsbeispiel,
- Fig. 3: zeigt eine schematische Darstellung einer Wärmepumpenanlage gemäß einem zweiten Ausführungsbeispiel,
- Fig. 4: zeigt eine schematische Darstellung einer Wärmepumpenanlage gemäß einem dritten Ausführungsbeispiel, und
- Fig. 5: zeigt eine schematische Darstellung einer Wärmepumpenanlage gemäß einem vierten Ausführungsbeispiel.

Fig. 2 zeigt eine schematische Darstellung eines Kältekreises einer Wärmepumpenanlage gemäß einem ersten Ausführungsbeispiel. Der Kältekreis KK der Wärmepumpenanlage weist einen Verdampfer 10, einen Verflüssiger 20, einen Verdichter 30, ein elektronisches Expansionsventil 100 und einen Regler 50 auf. Der Regler 50 erfasst den Druck und die Temperatur beispielsweise vor dem Verdampfer 10 und regelt den Verdichter, das elektronische Expansionsventil sowie die Drehzahl des Lüfters des Verdampfers 10.

In einer Normalbetriebsart wird ein erster Drosselwert an dem elektronischen Expansionsventil 100 beispielsweise mittels des Reglers 50 eingestellt. In einer Abtaubetriebsart wird ein zweiter Drosselwert an dem elektronischen Expansionsventil beispielsweise mittels des Reglers 50 eingestellt.

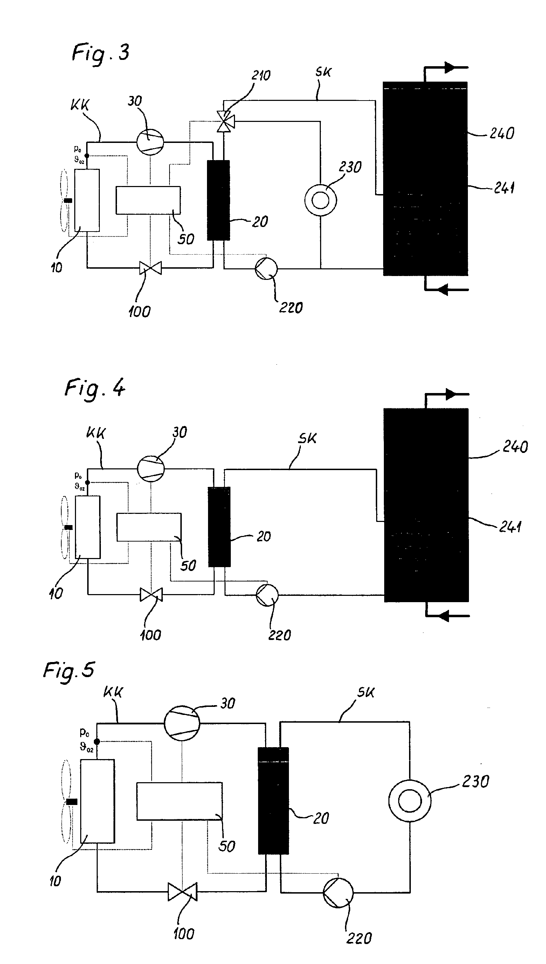

Fig. 3 zeigt eine schematische Darstellung einer Wärmepumpenanlage gemäß einem zweiten Ausführungsbeispiel. Hierbei entspricht der Kältekreislauf KK gemäß dem zweiten Ausführungsbeispiel dem Kältekreislauf KK gemäß dem ersten Ausführungsbeispiel, d. h. im Kältekreislauf KK ist ein Verdampfer 10, ein elektronisches Expansionsventil 100, ein Verflüssiger 20, ein Verdichter 30 sowie ein Regler 50 vorgesehen. An dem Verflüssiger ist wiederum sowohl eine Raumheizung 230 als auch eine Warmwasserbereitung 240 angeschlossen. Hierzu wird ein Umschaltventil 210 sowie eine Heizkreispumpe 220 vorgesehen. Sowohl das Umschaltventil 210 als auch die Heizkreispumpe 220 ist mit dem Regler 50 gekoppelt, so dass diese von dem Regler gesteuert werden können. In dem Verflüssiger 20 wird die Wärme aus dem Kältekreislauf auf die Raumheizung und/oder auf die Warmwasserbereitung übertragen.

Wenn in einen Abtaubetrieb umgeschaltet wird, dann wird die Heizkreispumpe 220 ausgeschaltet, so dass keine Wärme aus dem Verflüssiger 20 mittels der Raumheizung oder mittels der Warmwasseraufbereitung 240 entzogen werden kann. Somit kann die gesamte sich in dem Verflüssiger 20 befindliche Wärme zum Abtauen des Verdampfers verwendet werden.

Fig. 4 zeigt eine schematische Darstellung einer Wärmepumpenanlage gemäß einem dritten Ausführungsbeispiel. Hierbei entspricht die Wärmepumpenanlage gemäß dem dritten Ausführungsbeispiel im Wesentlichen der Wärmepumpe gemäß dem zweiten Ausführungsbeispiel, wobei jedoch die Raumheizung 230 und das Umschaltventil 210 entfällt. Die Wärmepumpenanlage gemäß dem dritten Ausführungsbeispiel dient somit als eine reine Warmwasserwärmepumpe.

Fig. 5 zeigt eine schematische Darstellung einer Wärmepumpenanlage gemäß einem vierten Ausführungsbeispiel. Die Wärmepumpenanlage gemäß dem vierten Ausführungsbeispiel entspricht im Wesentlichen der Wärmepumpenanlage gemäß dem zweiten Ausführungsbeispiel, wobei jedoch die Warmwasserbereitung entfällt. Somit kann ebenfalls das Umschaltventil 210 wiederum entfallen.

In den obigen Ausführungsbeispielen wurde ein elektronisches Expansionsventil 100 anstatt eines herkömmlichen Expansionsventils verwendet. Somit kann auf das erste und zweite Magnetventil M1, M2 verzichtet werden.

Wenn die Wärmepumpenanlagen gemäß den obigen Ausführungsbeispielen in einer Normalbetriebsart betrieben werden, dann wird die Sekundärseite SK (die rechte Seite in den Fig. 3, 4 und 5) beispielsweise mit Wasser durchströmt und kann somit Wärme von dem Verflüssiger 20 aufnehmen. In einer Abtaubetriebsart wird die Heizkreispumpe 220 ausgeschaltet, so dass keine weitere Wärme über die Sekundärseite SK von dem Verflüssiger 20 entnommen werden kann. Damit fließt das Kältemittel von dem Verdichter 30 in den Verflüssiger 20 fließt, ohne dabei Wärme abzugeben. Anschließend fließt es durch das elektronische Expansionsventil 100, welches als Drossel mit einem zweiten Drosselwert arbeitet, zu dem Verdampfer 10 und gibt dort die Wärme ab und wird wieder in dem Verdichter 30 verdichtet.

In einer Normalbetriebsart (bei einem ersten Drosselwert) wird die Wärme des Kältemittels in dem Verflüssiger 20 an einen Sekundärkreis SK abgegeben. Sowohl in der Normalbetriebsart als auch in der Abtaubetriebsart läuft das Kältemittel im Uhrzeigersinn durch den Kältekreis der Wärmepumpenanlage. Beim Umschalten von der Normalbetriebsart in die Abtaubetriebsart wird die Heizkreispumpe 220 umgeschaltet und das elektronische Expansionsventil 100 arbeitet als Drossel mit einem zweiten Drosselwert. Die Einstellungen der Heizkreispumpe 220 und des elektronischen Expansionsventils 100 können hierbei auf feste Werte eingestellt werden oder mittels des Reglers 50 geregelt bzw. gesteuert werden. Während der Abtaubetriebsart kann das elektronische Expansionsventil 100 auf einen anderen Wert eingestellt werden als in der Normalbetriebsart.

In der Abtaubetriebsart kann die Heizgaspumpe 220 komplett ausgeschaltet werden oder in ihrer Leistung reduziert werden. Wenn die Heizkreispumpe 220 lediglich in ihrer Leistung reduziert wird, so wird Wärme aus dem Verflüssiger 20 in dem Sekundärkreislauf SK aufgenommen, so dass weniger Wärme zum Abtauen zur Verfügung steht und der Abtauprozess verlängert wird.

Das Abtauen des Verdampfers 10 kann in regelmäßigen Abständen oder bedarfsorientiert erfolgen.

Die oben genannten Kältemittel können die folgenden Kältemittel darstellen: R290, R744, R410A, R134a, R407C oder R600a.

## Patentansprüche

1. Wärmepumpenanlage, mit
einem Kältekreislauf (KK) und einem Sekundärkreislauf (SK),
wobei der Kältekreislauf (KK) einen Verdampfer (10), einen Verflüssiger (20), einen Verdichter (30) und ein elektronisches Expansionsventil (100) aufweist, wobei der Kältekreislauf (KK) durch einen Regler (50) gesteuert wird,
wobei der Sekundärkreislauf (SK) eine Heizkreispumpe (220) aufweist und mit dem Verflüssiger (20) gekoppelt ist,
wobei in einer Normalbetriebsart die Heizkreispumpe (220) aktiviert ist und ein erster Drosselwert in dem elektronischen Expansionsventil (100) mittels des Reglers (50) eingestellt wird,
wobei in einer Abtaubetriebsart die Heizkreispumpe (220) abgeschaltet wird oder in ihrer Leistung reduziert wird und ein zweiter Drosselwert in dem elektronischen Expansionsventil (100) mittels des Reglers (50) eingestellt wird.

2. Wärmepumpenanlage nach Anspruch 1, wobei in dem Sekundärkreis (SK) eine Raumheizung (230) und/oder eine Warmwasseraufbereitungseinheit (240) vorgesehen ist.

3. Verfahren zum Abtauen einer Wärmepumpenanlage mit einem Kältekreislauf (KK) und einem Sekundärkreislauf (SK), wobei der Kältemittelkreislauf (KK) einen Verdampfer (10), einen Verflüssiger (20), einen Verdichter (30) und ein elektronisches Expansionsventil (100) aufweist,
wobei der Sekundärkreislauf (SK) mit dem Verflüssiger (20) gekoppelt ist und eine Heizkreispumpe (220) aufweist, mit den Schritten:
Einstellen eines ersten Drosselwertes an dem elektronischen Expansionsventil (100) in einer Normalbetriebsart,
Ausschalten der Heizkreispumpe (220) oder Reduzierung der Leistung der Heizkreispumpe (220) und
Einstellen eines zweiten Drosselwertes an dem elektronischen Expansionsventil (100) in einer Abtaubetriebsart.
